# EUROPÄISCHE PATENTSCHRIFT

(11) **EP 1 238 907 B1**
(45) Veröffentlichungstag und Bekanntmachung des Hinweises auf die Patenterteilung: **13.10.2004**
(21) Anmeldenummer: 02004459.0
(22) Anmeldetag: 27.02.2002
(51) Int. Cl.: B64C 31/06

(54) **Lenkbarer Zugdrachen**
Steerable kite
Cerf-volant dirigeable

(30) Priorität: 01.03.2001 DE 10109640
(43) Veröffentlichungstag der Anmeldung: 11.09.2002
(73) Patentinhaber: Van Helden, Friedrich, 41849 Wassenberg (DE)
(72) Erfinder: Van Helden, Friedrich, 41849 Wassenberg (DE)
(74) Vertreter: Kohlmann, Kai, Dipl.-Ing.

(56) Entgegenhaltungen:
- WO-A-99/59866
- DE-C- 200 872
- DE-U- 8 803 081
- US-A- 1 892 985
- US-A- 2 465 917

## Beschreibung

Die Erfindung betrifft einen lenkbaren Zugdrachen, umfassend eine zumindest durch eine Anström- und eine Abströmkante begrenzte Segelfläche, die von wenigstens einem an der Anströmkante angeordneten flexiblen, in der Aufsicht konvex verlaufenden Leitkantenstab und mindestens einem von der Anströmin Richtung der Abströmkante verlaufenden flexiblen Kielstab aufgespannt wird.

Lenkbare Zugdrachen sind an mehreren Leinen angeleint und dienen beispielsweise dem Schleppen von Land- oder Wasserfahrzeugen. Die Erfindung erstreckt sich insbesondere auf lenkbare Zugdrachen, die für das Schleppen eines sogenannten "Kite-Surfers" auf dem Wasser geeignet sind. Kite-Surfen bezeichnet eine relativ junge Sportart, bei der ein Surfer auf einem Surfbrett von einem lenkbaren Zugdrachen über die Wasseroberfläche gezogen wird. Als Zugdrachen für das Kite-Surfen kommen.
a) Mattenschirme,
b) Tube-Kites sowie
c) Stabdrachen
zum Einsatz.

Die Mattenschirme weisen regelmäßig eine flexible, nicht von einem Rahmen gestützte Segelfläche auf. Die Anströmkante wird lediglich durch längs der Anströmkante angeordnete Seile einer aufwendigen Waagschnurkonstruktion stabilisiert. Aus dieser Instabilität des Mattenschirms folgen aerodynamisch ungünstige Eigenschaften, insbesondere Instabilität im Zenit, Strömungsabriss beim Übersteigen des Zenits mit darauf folgendem Absturz sowie ständiges Steigen, sofern nicht gezielt gegengesteuert wird.

Neben den aerodynamisch ungünstigen Eigenschaften besteht ein zentraler Nachteil der Mattenschirme darin, daß sie nach einem Absturz in das Wasser nicht aus dem Wasser gestartet werden können. Die Wasserstart-Fähigkeit eines lenkbaren Zugdrachens ist jedoch für das Kite-Surfen eine wesentliche Voraussetzung, insbesondere wenn auch weniger geübte Kite-Surfer den Zugdrachen verwenden sollen.

Der in der DE 2737597 C2 dargestellte, abgewandelte Mattenschirm besteht aus einem flexiblen hüllenartigen Profilkörper, der längs seiner wulstartigen Vorderkante eine Lufteintrittsöffnung aufweist, im Inneren durch quer zur Vorderkante verlaufende Wandungen in Kammern unterteilt ist und Verankerungen für Leinen aufweist. Die gegen die Vorderkante anströmende Luft bläst über die Lufteintrittsöffnung den Profilkörper auf und hält ihn im aufgeblasenen Zustand. Der Luftdruck bleibt in diesem Mattenschirm nach einem Absturz in das Wasser für eine gewisse Dauer erhalten. Er ist daher bedingt wasserstartfähig und auch für Anfänger geeignet. Die wulstartige dicke Vorderkante wirkt sich allerdings ungünstig auf die Flug- und Steuereigenschaften dieses Mattenschirmes aus.

Tube-Kites weisen Luftkammern in Form eines massiven Frontschlauchs an der Anströmkante sowie mehreren in Richtung der Flugachse verlaufenden Längsröhren auf, die allerdings permanent mit Luft gefüllt sind. Hierdurch werden zwar die Wasserstarteigenschaften verbessert, allerdings unter Inkaufnahme ungünstiger Flug- und Steuereigenschaften.

Stabdrachen, die als Zugdrachen beim Kite-Surfen Einsatz finden, sind die sogenannten "Delta-Kites" von Cory Roeseler und Peter Lynn, die in der US 5366182 sowie der WO 99/59866 dargestellt sind. Die bekannten Delta-Kites zeichnen sich durch einen in der Aufsicht auf die Segelfläche konvex verlaufenden flexiblen Leitkantenstab und mehrere von der Anström- in Richtung der Abströmkante verlaufende elastische Kielstäbe aus, die zusammen mit dem Leitkantenstab die Segelfläche aufspannen. Diese lediglich einseitig mit Segeltuch bespannten, einen flexiblen Rahmen aufweisenden Delta-Kites haben einen Preisvorteil gegenüber den zuvor beschriebenen Tube-Kites für das Kite-Surfen, da wesentlich weniger Material zu ihrer Herstellung benötigt wird.

Bei gleichmäßigem Starkwind weisen die bekannten Delta-Kites gute Flugeigenschaften auf und sind daher für den leistungsorientierten Kite-Surfer gut kontrollierbar. Der Delta-Kite gem. der WO 99/59866 ist jedoch nicht wasserstartbar, während ein Wasserstart mit dem Delta-Kite gem. der US 5366182 außerordentlich schwierig ist. In jedem Fall müssen vor dem Wasserstart die Leinen mit einer Leinenwinde eingeholt werden. Anschließend muss der Kite-Surfer den Drachen schwimmend aus dem Wasser heben, um ihn sodann zu starten. Nach dem Start müssen die Leinen wieder auf die für das Kite-Surfen gewünschte Länge ausgebracht werden. Die verbesserten Flugeigenschaften der Delta-Kites gegenüber den Tube-Kites werden durch die dünnen Leitkantenstäbe, beispielsweise aus Carbon hervorgerufen, die einen geringeren Staudruck verursachen.

Die bekannten Delta-Kites mit gegenüber Tube-Kites und Mattenschirmen verbesserten Flugeigenschaften weisen allerdings den Nachteil auf, daß sie nur in einem recht engen Windbereich bei gegebenen Segelfläche einsetzbar sind.

Ferner ist aus der DE 20 30 549 A1 ein Fesselflugspiel mit einem drachenartigen Flugkörper bekannt, dessen Flächenspannweite größer ist als die axiale Länge der Bespannung und dessen Querholm bogenförmig verläuft, wobei die Querholme den Längsholm des Flugkörpers innerhalb des vorderen Viertels kreuzen. Die freien Enden der Längsholme sind unter Vorspannung, beispielsweise durch eine Umfalzung, mit der Bespannung straff gespannt verbunden. Indem dieser Flugkörper an einer kurzen Halteschnur angeschlossen ist, die an dem Ende eines Stocks frei drehbar befestigt ist, soll das Fesselflugspiel wetterunabhängig, insbesondere auch unter beengten räumlichen Verhältnissen allerorts geflogen werden können.

Schließlich ist aus der US-A-1 892 985 ein Drachen bekannt, der für Lagerung und Transport zerlegbar ausgeführt ist. Ein vertikaler und ein gebogener Stab des Drachenrahmens sind lösbar miteinander über eine Klammer verbunden. Die Biegung des gebogenen Stabs wir durch eine Schnur hervorgerufen, die mit den Enden des Stabs verbunden ist. Die Krafteinleitung erfolgt über Querstifte an den Enden des Stabs. Über die Biegung des Stabs wird eine Spannung in der Schnur und der Segelfläche des Drachens hervorgerufen.

Ausgehend von diesem Stand der Technik liegt der Erfindung daher die Aufgabe zugrunde, einen Zugdrachen für das Kite-Surfen zu schaffen, der bei hoher Zugleistung verbesserte Flugeigenschaften aufweist, insbesondere eine Positionierung des Zugdrachens im Zenit ohne Lenkkorrekturen ermöglicht sowie eine verbesserte Wasserstart-Fähigkeit aufweist.

Der Lösung dieser Aufgabe liegt der Gedanke zugrunde, daß die Segelfläche des Zugdrachens nach Art eines Tragflügels allseitig vorgespannt wird.

Im einzelnen wird die Aufgabe bei einem lenkbaren Zugdrachen der eingangs erwähnten Art dadurch gelöst, daß an der Segelfläche mindestens ein flexibler Querstab angeordnet ist, der kürzer als der Leitkantenstab ist, und sich zwischen den Enden des Leitkantenstabs ein Zugmittel erstreckt. Der Querstab erstreckt sich im wesentlichen senkrecht zur Flugachse und ist an der Segelfläche angeordnet. Je nach Länge ruft das Zugmittel in Verbindung mit dem Querstab eine mehr oder weniger große Vorspannung in der Segelfläche von der Anströmkante in Richtung der Abströmkante hervor.

Die Vorspannung stellt auch bei nachlassendem Wind sicher, daß das Profil der Segelfläche des Zugdrachens erhalten bleibt. Dies verhindert wirksam unerwünschte Abstürze infolge eines kollabierenden Profils bei nachlassendem oder böigem Wind. Die erfindungsgemäß vorgespannte Segelfläche verhindert darüber hinaus wirksam Strömungsabrisse und unterstützt ein direktes Ansprechen des Zugdrachens auf Lenkimpulse, die in an sich bekannter Weise über Leinen auf die Segelfläche übertragen werden.

Abhängig von der Länge des Zugmittels verändert sich die Wölbung der im entspannten Zustand ebenen Segelfläche. Eine größere Wölbung verringert die wirksame Luftangriffsfläche und erweitert damit den Einsatzbereich des Zugdrachens in Richtung höherer Windstärken. Eine geringere Wölbung vergrößert die wirksame Luftangriffsfläche und erweitert damit den Einsatzbereich des Zugdrachens in Richtung geringerer Windstärken. Der lenkbare Zugdrachen lässt sich mit dieser konstruktiv einfachen Maßnahme an unterschiedliche Windstärken anpassen, ohne daß der optimale Anstellwinkel des Zugdrachens zum Wind verändert werden muss, wie dies bei herkömmlichen lenkbaren Zugdrachen notwendig ist.

Be einem Wasserstart bewirkt die aus der Vorspannung resultierende Formstabilität des Profils, daß die wassernah vorhandene Luftströmung unmittelbar in Auftriebsleistung umgesetzt wird. Ein Einholen der Leinen ist für den Wasserstart nicht mehr erforderlich.

In der einfachsten Form handelt es sich bei dem längenveränderlichen Zugmittel um ein Seil, daß sich über die Spannweite der Segelfläche zwischen den gegenüberliegenden Enden des Leitkantenstabs erstreckt.

Die Flugeigenschaften werden durch die derart vorgespannte Segelfläche dadurch verbessert, daß jede Luftströmung von dem Drachen unmittelbar in Auftrieb umgesetzt wird, während bei herkömmlichen lenkbaren Zugdrachen ein Teil der Energie der Luftströmung zur Ausbildung und Stabilisierung des Profils der Segelfläche benötigt wird.

In Versuchen hat sich herausgestellt, daß sich das Profil aufgrund der Vorspannung der Segelfläche besonders günstig ausbildet, wenn der Querstab hinter der Anströmkante an der Segelfläche angeordnet ist und seine Enden an die Enden des Leitkantenstabes anstoßen. Wird der Querstab mit seinen Enden im Abstand von den Enden des Leitkantenstabes angeordnet, geht damit eine Verschlechterung der Aerodynamik der aufgespannten Segelfläche einher.

Des weiteren hat es sich für die Ausbildung eines aerodynamisch optimalen Profils als vorteilhaft herausgestellt, wenn der Querstab kürzer als der Leitkantenstab ist und die Enden des Querstabs mit den Enden des Leitkantenstabes verbunden sind, beispielsweise durch Stabverbinder.

In einer weiteren Ausgestaltung der Erfindung ist es möglich, daß die Längenveränderung des Zugmittels auch während der Flugphase des Zugdrachens über eine Fernsteuerung, beispielsweise über eine weitere, mittig an dem Zugmittel angreifende Leine, veränderlich ist.

Ein Zuschnitt der Segelfläche nach den Merkmalen des Unteranspruchs 4 verbessert die Wasserstarteigenschaften des Zugdrachens, insbesondere in Verbindung mit an der Segelfläche angeordneten Auftriebsmitteln, die zweckmäßigerweise an deren Oberseite angeordnet sind und sich von der Anströmkante in Richtung der Abströmkante im wesentlichen parallel zur Flugachse erstrecken. Beim Absturz des Zugdrachens in das Wasser drückt sein Eigengewicht die Auftriebskörper soweit in das Wasser, bis Auftrieb und Eigengewicht im Gleichgewicht sind. In dieser stabilen Gleichgewichtslage des Zugdrachens befindet sich die hintere Abströmkante unter der Wasseroberfläche, während die Anströmkante zumindest teilweise aus dem Wasser herausragt. Zum Wasserstart wird über die Steuerleinen einseitig seitlicher Zug auf die Segelfläche ausgeübt, so daß der Drachen über eine Schwenkbewegung um den die Segelfläche seitlich begrenzenden, unter Wasser befindlichen gegenüberliegenden seitlichen Rand aus dem Wasser aufsteigt. Für einen Wasserstart muss die Segelfläche nicht notwendigerweise im rechten Winkel zur Windrichtung stehen.

Die Ausrichtung und Steuerung des erfindungsgemäßen Zugdrachens kann über 4, 3 und 2 Leinen erfolgen. Als besonders zweckmäßig haben sich jedoch 3 Leinen herausgestellt, zwei Lenkleinen und eine Halteleine. Die Halteleine teilt sich nahe der Unterseite der Segelfläche in an sich bekannter Weise in mehrere Waagschnüre auf, die an dafür vorgesehenen Befestigungspunkten an der Unterseite des Zugdrachens angeordnet sind. Zweckmäßige Positionen der Befestigungspunkte ergeben sich aus den Merkmalen der Unteransprüche 6 und 7.

Nachfolgend wird der erfindungsgemäße Zugdrachen anhand einer schematischen Zeichnung des näheren erläutert:

Der insgesamt mit 1 bezeichnete Zugdrachen weist eine Segelfläche 2 auf, die von einer Anströmkante 3 einer Abströmkante 4 sowie zwischen der Anström- und der Abströmkante 3,4 befindliche seitliche Ränder 5 begrenzt wird. Die flexible Segelfläche 2, die vorzugsweise aus Spinaker Neilon oder K42 Carrington besteht, wird von einem entlang der Anströmkante 3 verlaufenden Leitkantenstab 6, insgesamt 3 von der Anströmin Richtung der Abströmkante 3,4 verlaufenden Kielstäben 7 sowie einem Querstab 8 aufgespannt.

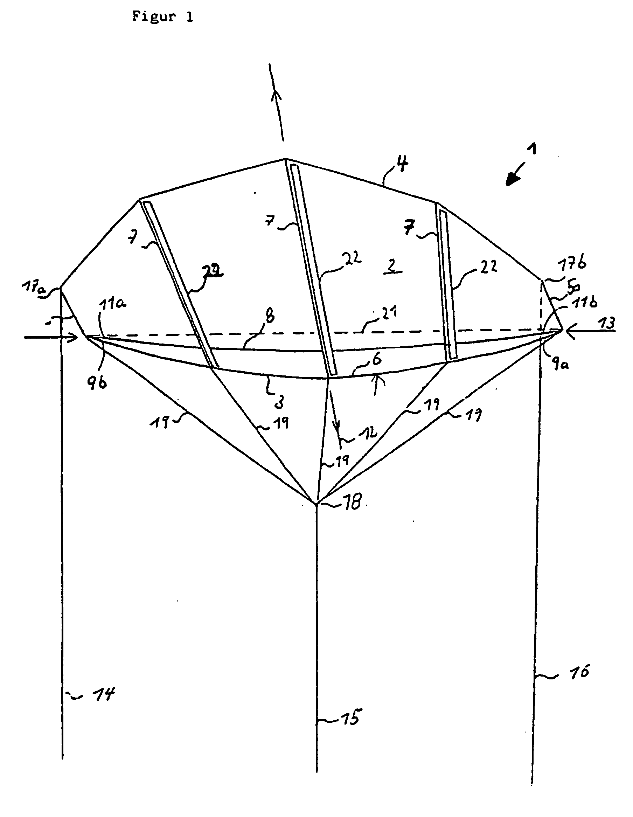

Die Enden 9a, 9b des Leitkantenstabes 6 sind mit den Enden 11a, 11b des Querstabes 8 verbunden. Die drei Kielstäbe 7 verlaufen von der Anströmkante 3 in Richtung der Abströmkante 4 parallel zu der Flugachse 12 des Zugdrachens 1. Zusammen mit dem Querstab 8 unterteilen die Kielstäbe 7 die Segelfläche in 8 Felder, die von diesem Tragwerk aus Stäben 6, 7, 8 aufgespannt wird. Zwischen den Enden 9a, 9b, 11a, 11b von Leitkanten und Querstab befindet sich ein längenveränderliches Seil 21, das die Wölbung der im entspannten Zustand ebenen Segelfläche bestimmt. Soll während des Fluges des Zugdrachens 1 die Wölbung verändert werden, kann dies durch eine weitere, in der Zeichnung nicht dargestellte Leine erfolgen, die etwa mittig, an dem längenveränderlichen Seil 21 angreift. Dieses nicht dargestellte Leine zur Einstellung der Vorspannung des Zugmittels 21 kann beispielsweise an dem Haltebalken für den Kite-Surfer, an dem auch die übrigen Leinen 14, 15, 16 fahrerseitig befestigt sind, festgelegt werden. Um eine einhändige Verstellung während des Kite-Surfens zu ermöglichen, kann die Befestigung beispielsweise durch eine einhändig bedien- und arretierbare Aufrollspindel erfolgen. Abweichend zu bisher bekannten Zugdrachen, wird die Segelfläche 2 durch den elastischen Querstab 8 in Verbindung mit dem längenveränderlichen Seil 21 nicht nur über die Spannweite 13 der Segelfläche 2, sondern insbesondere auch in Richtung der Flugachse 12 vorgespannt.

Die Ausrichtung und Steuerung des Zugdrachens 1 erfolgt in an sich bekannter Weise mit insgesamt 3 Leinen 14, 15, 16, wobei die Leinen 14 und 16 als Lenkleinen jeweils am hinteren Ende 17a, 17b der seitlichen Ränder 5a, 5b an dafür vorgesehenen Befestigungspunkten angeschlagen sind. Die Anordnung der Lenkleinen 14, 16 an den hinteren Enden 17a, 17b ermöglicht eine besonders sensible Steuerung.

Entlang des Leitkantenstabes 6 sind insgesamt 5 Befestigungspunkte für Waagschnüre 19 angeordnet, die an ihrem jeweils anderen Ende mit weiteren, in der Figur nicht dargestellten Waagschnüren in einem Knotenpunkt 18 zusammenlaufen. Von dort geht die dritte Leine 15 zur Steuerung und Ausrichtung des Drachens aus. Die nicht dargestellten weiteren Waagschnüre verlaufen von dem Knotenpunkt 18 zu längs jedes Kielstabes 7 angeordneten Befestigungspunkten.

Schließlich weist der Zugdrachen 1 auf der Oberseite der Segelfläche 2 angeordnete längliche Auftriebskörper 22 auf, die beispielsweise aus Schaumstoff bestehen. Die Auftriebskörper erstrecken sich über die volle Länge der Kielstäbe 7.

Sowohl die Anordnung der Auftriebskörper 22 als auch sämtlicher Stäbe 7, 8, 9 auf der Segelfläche erfolgt zweckmäßiger Weise in Segeltaschen, die die vorzugsweise runden Stäbe zumindest abschnittsweise umgeben. Stirnseitig sind die Segeltaschen geschlossen und bilden damit ein Widerlager für die Stirnseiten der Stäbe. Die Kielstäbe können längs des Leitkantenstabes in hohlzylindrischen Aufnahmen gehalten und geführt sein, die drehbar um den Leitkantenstab angeordnet sind. An diesen Stellen sind die den Leitkantenstab umgebenden Segeltaschen unterbrochen oder weisen entsprechende, gegebenenfalls verschließbare Öffnungen für den Zugang zu den Aufnahmen auf. Alternativ können sowohl der Leitkantenstab als auch die Kielstäbe in durchgehenden, geschlossenen Segeltaschen geführt sein, die auf der Segelunterseite bzw. an der Stirnseite des Segels angeordnet sind.

### Bezugszeichenliste

| **Nr.** | **Bezeichnung** |
|---|---|
| 1. | Zugdrachen |
| 2. | Segelfläche |
| 3. | Anströmkante |
| 4. | Abströmkante |
| 5a, b | Seitliche Ränder |
| 6. | Leitkantenstab |
| 7. | Kielstab |
| 8. | Querstab |
| 9a, b | Enden Leitkantenstab |
| 10. | - |
| 11a, b | Enden Querstab |
| 12. | Flugachse |
| 13. | Spannweite |
| 14. | Lenkleine |
| 15. | Halteleine |
| 16. | Lenkleine |
| 17a, b | Befestigungspunkte |
| 18. | Knotenpunkt |
| 19. | Waagschnüre |
| 20. | - |
| 21. | Längenveränderliches Seil |
| 22. | Auftriebskörper |

## Patentansprüche

1. Lenkbarer Zugdrachen (1) umfassend eine zumindest durch eine Anström- und eine Abströmkante (3, 4) begrenzte Segelfläche (2), die von wenigstens einem an der Anströmkante (3) angeordneten flexiblen, in der Aufsicht konvex verlaufenden Leitkantenstab (6) und mindestens einem von der Anström- in Richtung der Abströmkante verlaufenden elastischen Kielstab (7) aufgespannt wird, **dadurch gekennzeichnet, daß** an der Segelfläche (2) mindestens ein flexibler Querstab (8) angeordnet ist, der kürzer als der Leitkantenstab (6) ist, und sich zwischen den Enden (9a, 9b) des Leitkantenstabs (6) ein Zugmittel (21) derart erstreckt , daß die Segelfläche durch den Leitkanten stab (6), den mindestens einen kielstab (7) und den Querstab (8) allseitig nach Art eines Tragflügels vorgespannt wird.

2. Lenkbarer Zugdrachen nach Anspruch 1, **dadurch gekennzeichnet, daß** der Querstab (8) hinter der Anströmkante (3) an der Segelfläche angeordnet ist und seine Enden (11a,11b) an die Enden (9a,9b) des Leitkantenstabes (6) anstoßen

3. Lenkbarer Zugdrachen nach Anspruch 2, **dadurch gekennzeichnet daß** die Enden(11a,11b) des Querstabs (8) mit den Enden (9a,9) des Leitkantenstabs (6) verbunden sind.

4. Lenkbarer Zugdrachen nach einem der Ansprüche 1 bis 3, **dadurch gekennzeichnet, daß** sich zwischen der Anströmund der Abströmkante (3,4) der Segelfläche (2) im Verhältnis zu diesen Kanten kürzere, die Segelfläche (2) seitlich begrenzende Ränder (5a,5b) befinden, die im wesentlichen in Richtung der Flugachse (12) verlaufen.

5. Lenkbarer Zugdrachen nach einem der Ansprüche 1 bis 4, **dadurch gekennzeichnet, daß** entlang des Leitkantenstabes (6) sowie jedes Kielstabes (7) mehrere Befestigungspunkte für Waagschnüre (19) angeordnet sind.

6. Lenkbarer Zugdrachen nach einem der Ansprüche 4 oder 5, **dadurch gekennzeichnet, daß** am hinteren Ende (17a,17b) der seitlichen Ränder (5a,5b) der Segelfläche (2) jeweils ein Befestigungspunkt für eine Lenkschnur (14,16) angeordnet ist.

7. Lenkbarer Zugdrachen nach einem der Ansprüche 1 bis 6, **dadurch gekennzeichnet, daß** die die Segelfläche (2) aufspannenden Stäbe (6,7,8) zumindest teilweise in Segeltaschen geführt sind.

8. Lenkbarer Zugdrachen nach einem der Ansprüche 1 bis 7, **dadurch gekennzeichnet, daß** an der Segelfläche (2) Auftriebsmittel (22) angeordnet sind.

9. Lenkbarer Zugdrachen nach Anspruch 8, **dadurch gekennzeichnet, daß** sich auf der Oberseite der Segelfläche (2) Auftriebskörper von der Anströmkante (3) in Richtung der Abströmkante (4) zumindest über eine Teillänge der Segeltiefe erstrecken.

## Claims

1. Steerable traction kite (1) comprising a sail surface (2) bounded at least by one leading and one trailing edge (3, 4), which is spanned by at least one flexible leading edge-rod (6) arranged on the leading edge (3) running convexly when viewed from above, and at least one elastic keel rod (7) running from the leading edge towards the trailing edge, **characterised in that** at least one flexible transverse rod (8) is arranged on the sail surface (2), which is shorter than the leading-edge rod (6), and a tension means (21) extends between the ends (9a, 9b) of the leading-edge rod (6) such that the sail surface is prestressed by the leading -edge rod (6), the at least one keel rod (7) and the transverse rod (8) on all sides in the fashion of an airfoil wing.

2. The steerable traction kite according to claim 1, **characterised in that** the transverse rod (8) is arranged after the leading edge (3) on the sail surface and its ends (11a, 11b) abut against the ends (9a, 9b) of the leading-edge rod (6).

3. The steerable traction kite according to claim 2, **characterised in that** the ends (11a, 11b) of the transverse rod (8) are connected to the ends (9a, 9) of the leading-edge rod (6).

4. The steerable traction kite according to any one of claims 1 to 3, **characterised in that** between the leading and the trailing edge (3, 4) of the sail surface (2) there are edges (5a, 5b) laterally bounding the sail surface (2), which are shorter than said leading and trailing edges, and which run substantially in the direction of the flight axis (12).

5. The steerable traction kite according to any one of claims 1 to 4, **characterised in that** a plurality of fixing points (18) for bridle cords (19) are arranged along the leading-edge rod (6) and each keel rod (7).

6. The steerable traction kite according to any one of claims 4 or 5, **characterised in that** at the rear end (17a, 17b) of the side edges (5a, 5b) of the sail surface (2) respectively one fixing point is arranged for a steering cord (14, 16).

7. The steerable traction kite according to any one of claims 1 to 6, **characterised in that** the rods (6, 7, 8) spanning the sail surface (2) are at least partly guided in sail pockets.

8. The steerable traction kite according to any one of claims 1 to 7, **characterised in that** buoyancy means (22) are arranged on the sail surface (2).

9. The steerable traction kite according to claim 8, **characterised in that** on the upper side of the sail surface (2) buoyancy bodies extend from the leading edge (3) towards the trailing edge (4) at least over a part length of the sail depth.

## Revendications

1. Cerf-volant dirigeable (1) comprenant une surface de voile (2) délimitée par au moins un bord d'attaque et un bord de fuite (3, 4), qui est tendue par au moins un baguette flexible de bord d'attaque (6) disposée sur le bord d'attaque (3), qui est convexe en vue par le dessus et par au moins une baguette de quille (7) élastique s'étendant du bord d'attaque vers le bord de fuite, **caractérisé en ce qu'**au moins une baguette transversale flexible (8) qui est plus courte que la baguette du bord d'attaque (6) et qui s'étend entre les extrémités (9a, 9b) de la baguette du bord d'attaque (6) est disposée sur la surface de la voile (2) et **en ce qu'**un moyen de traction (21) s'étend entre les extrémités (9a, 9b) de la baguette du bord d'attaque (6), de façon à ce que la surface de la voile soit précontrainte de toutes les côtés à la manière d'une aile portante, par la baguette du bord d'attaque (6), par la baguette de quille (7) qui est au moins au nombre de un et par la baguette transversale (8).

2. Cerf-volant de traction dirigeable selon la revendication 1, **caractérisé en ce que** la baguette transversale (8) est disposée derrière le bord d'attaque (3) sur la surface de la voile et **en ce que** ses extrémités (11a, 11b) butent contre les extrémités (9a, 9b) de la baguette du bord d'attaque (6).

3. Cerf-volant de traction dirigeable selon la revendication 2, **caractérisé en ce que** les extrémités (11a, 11b) de la baguette transversale (8) sont reliées aux extrémités (9a, 9) de la baguette du bord d'attaque (6).

4. Cerf-volant de traction dirigeable selon l'une quelconque des revendications 1 à 3, **caractérisé en ce qu'**entre le bord d'attaque et le bord de fuite (3, 4) de la surface de la voile (2) se trouvent des bords (5a, 5b) plus courts par rapport à ces derniers, qui délimitent latéralement la surface de la voile (2) et qui s'étendent sensiblement en direction de l'axe de vol (12).

5. Cerf-volant de traction dirigeable selon l'une quelconque des revendications 1 à 4, **caractérisé en ce que** plusieurs points de fixation pour des cordons horizontaux (19) sont disposés le long de la baguette du bord d'attaque (6) et de chaque baguette de quille (7).

6. Cerf-volant de traction dirigeable selon l'une quelconque des revendications 4 ou 5, **caractérisé en ce qu'**un point de fixation pour un cordon de direction (14, 16) est disposé respectivement sur l'extrémité postérieure (17a, 17b) des bords latéraux (5a, 5b) de la surface de la voile (2).

7. Cerf-volant de traction dirigeable selon l'une quelconque des revendications 1 à 6, **caractérisé en ce que** les baguettes (6, 7, 8) qui tendent la surface de la voile (2) sont guidées au moins partiellement dans des poches de la voile.

8. Cerf-volant de traction dirigeable selon l'une quelconque des revendications 1 à 7, **caractérisé en ce que** des moyens porteurs (22) sont disposés sur la surface de la voile (2).

9. Cerf-volant de traction dirigeable selon la revendication 8, **caractérisé en ce que** des corps porteurs s'étendent sur la face supérieure de la surface de la voile (2), à partir du bord d'attaque (3), en direction du bord de fuite (4), au moins sur une longueur partielle de la profondeur de la voile.
